# EUROPEAN PATENT SPECIFICATION

(11) **EP 2 846 243 B1**
(45) Date of publication and mention of the grant of the patent: **14.08.2019**
(21) Application number: 13004326.8
(22) Date of filing: 04.09.2013
(51) Int. Cl.: G06F 3/0488, G06F 3/0484

(54) **Graphical user interface providing virtual super-zoom functionality**
Graphische Benutzerschnittstelle mit virtueller Super-Zoom-Funktionalität
Interface d'utilisateur graphique fournissant une fonctionnalité de super zoom virtuel

(43) Date of publication of application: 11.03.2015
(73) Proprietor: Rath, Matthias, Aptos, CA 95003 (US)
(72) Inventor: Rath, Matthias, Aptos, CA 95003 (US); Karnath, Dirk Fried, 40223 Düsseldorf (DE)
(74) Representative: Féaux de Lacroix, Stefan

(56) References cited:
- US-A1- 2004 155 888
- US-A1- 2012 050 332
- US-A1- 2013 198 663

## Description

### BACKGROUND

The invention relates to a graphical user interface (GUI) method and apparatus for providing an extended virtual zoom functionality which can be controlled by a user of a graphical display of an underlying computer or data processing device or system.

In particular in the field of mobile computing devices, including but not being restricted to tablet PCs, laptops, mobile phones or palmtops, user input using a touch sensitive screen becomes more and more popular. Those touch screens have implemented certain technology to determine a cursor position from a finger contact with the screen display.

There are known multi-event touch sensitive screens which simultaneously track multiple finger contacts. Based on such tracked finger contacts, the underlying GUI points, scrolls, performs virtual three-dimensional (3D) manipulation of displayed objects. In some cases, input by finger gestures is detected and, in response to the finger gestures, the device selects content, visually distinguishes the selected content, and/or updates the selected content based on detected input. In other cases, the device displays a command display area that includes one or more command icons, detects activation of a command icon in the command display area, and, in response to detecting activation of the command icon in the command display area, performs a corresponding action with respect to the selected content. Exemplary actions include cutting, copying, and pasting content.

Beyond the described user input functionality, it is known to provide a zoom functionality which is controlled by the user by increasing or decreasing the distance between the two touch points of a two-finger contact. In order to provide the mentioned zoom functionality, a magnification loupe may be displayed, e.g. in a context-sensitive manner, wherein the magnification power of the loupe may vary based on the size of a user interface element, corresponding to the location of the gesture on the touch-sensitive surface.

Concerning the mentioned GUI zoom functionality, there exist a number of different approaches for user input control or user interaction, respectively.

EP 0 990 202 A1 discloses a GUI touch screen having an entire collection of icons displayed at a scale in which the individual function of each icon is recognizable, but too small to easily access features of the function. By touching the screen area accommodating an area of the icon, the screen provides a zoomed-in version of that area so that the user can select a desired feature.

EP 2 492 788 A1 discloses a method of zooming in a GUI of an electronic device having a touch screen which comprises detecting a first, second and third touch event as the result of a first, second and third touch interaction at a first, second and third coordinate of the touch screen, wherein controlling the touch screen to perform a zoom operation on an image displayed on the GUI which is representative of a first distance between the first and the second coordinate and of a second distance between the first coordinate and the third coordinate.

US 2007 294 643 A1 discloses a GUI for graphically managing the navigational usability of an interactive geographic map wherein the GUI includes a layer hierarchy having a first layer and at least a second layer. A first display range bar is associated with the first layer and configured to show a range of map scales at which the first layer is displayed in the digitized map and a second display range bar associated with the second layer and configured to show a range of map scales at which the second layer is displayed in the digitized map. The layer hierarchy enables a map developer to efficiently organize and manage the layers of a digitized map based on the draw priority of the various layers, the graphics styles associated with each of the various layers and the ranges of map scale, i.e. zoom factors, at which the various layers are displayed in the digitized map.

US 2012 0050332 A1 relates to a method and an apparatus for facilitating content navigation. The method includes pre-rendering content at a plurality of zoom levels, for example a first zoom level and a second zoom level. One layer may be displayed such that it is viewable. The other layer may be maintained in a memory for display when needed or may be layered underneath the displayed layer such that it is not visible on the display due to being covered by the displayed layer.

US 2004 0155888 A1 relates to a method for displaying the contents of a collection of media objects. Visual images are associated with each media object and the visual images are displayed in an arrangement that is determined at least in part by the one or more parameters associated with the media object with which the visual image is associated.

US 2013 198663 A1 discloses a hierarchical user interface. One or more components of the user interface are arranged in a hierarchy of layers. The user interface comprises first components which are children of second components. The first components of the user interface from a first layer are floating on top of the second components from a second layer beneath the first layer. The interface allows a user to interact with the components uniformly, such that each specific user interaction, when applied to each of the components, results in a similar response from each of the components.

### SUMMARY

The invention concerns a method for providing an extended virtual zoom functionality according to claims 1 and 2.

The method relates to providing a graphical user interface (GUI) of a computer or data processing device for a display screen, which is a touch sensitive screen, wherein the GUI presents at least one virtual two- or three-dimensional object in a way that a user can explore or navigate through the object with minimal input control requirements by the user wherein providing a virtual zoom functionality with a considerably broad range of zoom levels, e.g. zoom levels differing by many orders of magnitude.

These zoom levels, in the real world, preferably would range from macroscopic zoom levels that can be reached using a magnifying glass or loupe, covering microscopic zoom levels that can be reached using an optical microscope (LM) or a scanning electron microscope (SEM), up to even an atomic- or nanoscopic scale that can only be achieved using a transmission electron microscope (TEM), an atomic force microscope (AFM) or a tunneling microscope (TM). The inventive zoom functionality provides an easy access by the user to all these zoom levels at once and thus enables navigation through the object from a mentioned macroscopic view to a mentioned atomic-scale view and thus can be designated as virtual super-zoom functionality.

The inventive super-zoom functionality, according to one aspect or embodiment of the invention, is provided by a discrete arrangement of such different zoom levels by way of corresponding zoom layers, or levels respectively, wherein each zoom layer can be accessed or activated using a respective control input by the user. Within one zoom layer or level, the user can zoom-in or zoom-out thus changing the zoom factor using known control mechanisms like stretching two fingers on an above mentioned multi-event touch screen. When the user wishes to switch over to another zoom level, advantageously there is no requirement to reach the edge or limit (i.e. the minimum or maximum zoom factor possible at one zoom level) of the current zoom level, but moreover the user can directly switch over to another zoom level, either a zoom level adjacent to the current level or another level even more distant to the current level, only by performing a one-step input control action.

The one-step control action, in case of a touch screen, can be performed by using a third finger when zooming on a touch screen enabling to zoom in by stretching two fingers on the screen. Of course, as third finger, a third finger of the user's same hand or another (arbitrary) finger of the user's other hand can be used. In a non-inventive embodiment, the switch over to another zoom level can be supported by a pull-up menu, scroll wheel, or the like, by which the target zoom level can be selected. In application scenarios without a touch screen, certain control commands, entered by a computer keyboard or a computer mouse or any other pointer can be used.

The proposed mechanism to switch between different zoom levels is much less time consuming and thus much more user friendly than the prior art approaches. Thereupon, this mechanism allows for switching from one to another zoom layer without any restrictions, e.g. switching is possible at any current zoom factor or at any time, and thereupon prevents the user from accidentally or unintentionally switching to another level.

According to another aspect or embodiment, at least two zoom layers or levels can be presented at the same time, e.g. side by side or picture-in-picture wise, on the display. Preferably, these two zoom levels are a previously activated or accessed zoom layer and a currently activated or accessed zoom layer. This embodiment enables to present a current object, or part of the object, at two different zoom levels, for instance in order to ease navigation through these zoom levels or the entire zoom level hierarchy.

According to still another aspect or embodiment, in case of the mentioned presentation of at least two zoom layers or levels on the display, any actions or changes being done or being made to the object at a currently active zoom level will be made visible at the at least second presentation of the object using the second zoom level, or the consequences or effects of these actions or changes are made visible accordingly, as described in more detail in the following figurative description, This functionality can considerably increase the efficiency and value of e.g. an engineering tool or a learning tool.

According to a further aspect or embodiment, in addition to the mentioned discrete arrangement of zoom layers or levels, there is provided at least a second discrete arrangement of information layers, or levels respectively, wherein the at least two discrete arrangements can be implemented as vertical and horizontal lines of a two- or even multidimensional array or matrix. Such an array provides an easy access to different information levels or topics wherein the topics are preferably related to the corresponding zoom level.

The at least second discrete arrangement of information levels can be used to display or present relevant information for the underlying virtual object to be navigated through, in particular information adapted to the currently active zoom level. For instance, in case of the displayed object being a human body or organ, in case of an activated cellular zoom level, the relevant biochemical processes or regulations, possible causes for an underlying cell-based or cell-related disease and/or possible corresponding therapeutic interventions, can be presented on one screen, e.g. side-by-side, thus improving user perception of the presented information. Only as an example, in case of the underlying application being a learning appliance or tool, the learning process can be improved considerably.

It is noteworthy to mention that the mentioned virtual objects can be either virtually animated three-dimensional (3D) objects or two-dimensional objects because the underlying concept of the present invention does not depend on the number of dimensions how an object is presented on the screen or display.

The inventive super-zoom functionality can be implemented in a GUI to be displayed on a touch sensitive screen which is controlled by the user through mentioned finger contacts and/or movements. In a non-inventive alternative, the super-zoom functionality can be implemented in a GUI displayed on a screen or monitor of a computer or data processing device or system using a known computer keyboard, computer mouse, graphic input tablet or any other user input device. In case of an input control using a keyboard, a certain combination of control buttons of the keyboard can be used. In case of a computer mouse, graphic input tablet or the like, user input control of the super-zoom functionality can be accomplished using certain combinations of control buttons. In case of a mobile device, a touch screen and/or a jog dial allow for entering the required control commands by means of a data carrousel, scroll wheel, or the like, e.g. by way of selecting certain rotation angles of the carrousel or the like.

### BRIEF DESCRIPTION OF THE DRAWINGS

The objects, features and advantages of the invention are understood within the context of the Detailed Description, as set forth below. The Detailed Description is understood within the context of the accompanying drawings, which form a material part of this disclosure, wherein:
- FIG. 1A, B: show an exemplary arrangement of zoom layers or levels and a corresponding navigation process, according to the invention;
- FIG. 2: illustrates how to perform fast switching between different (not necessarily adjacent) zoom layers or levels;
- FIG. 3: shows an exemplary procedure according to the invention to perform switches between different objects or information without changing the zoom layer or level or factor;
- FIG. 4: shows an exemplary procedure according to the invention to select a part of a virtual 3D object in order to switch to another zoom layer or level;
- FIG. 5: depicts an exemplary array arrangement or structure of zoom layers or levels versus different object categories;
- FIG. 6: is a flow diagram of a preferred embodiment of the method according to the invention
- FIG. 7: shows an embodiment of the method according to the invention which enables that changes made to an object at one zoom level take effect at another zoom level.

### DETAILED DESCRIPTION

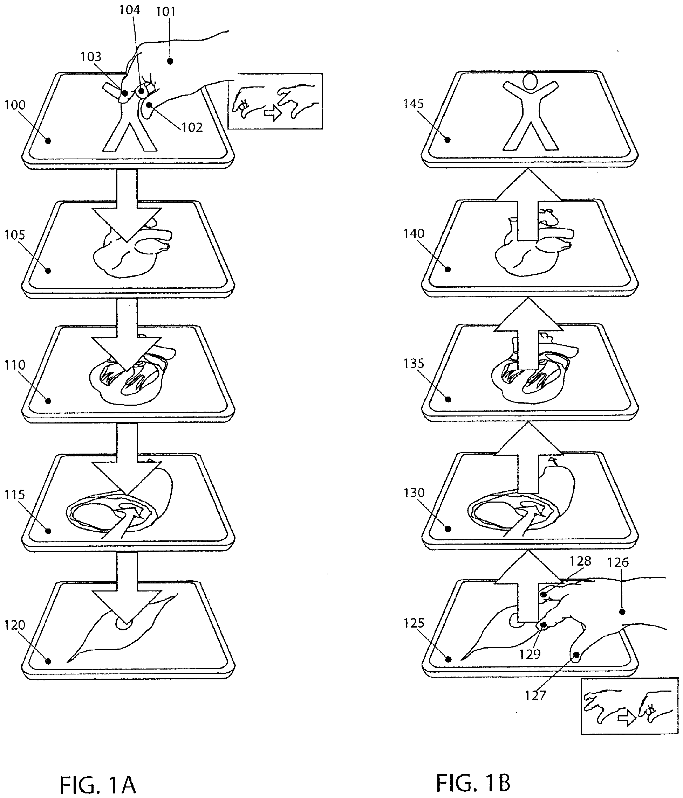

FIG. 1A and 1B depict a human biological or human medical appliance where the virtual object is a human body. The shown vertical zoom direction, in this example, provides microscopic or even nanoscopic zoom layers or levels (in the following designated only as "levels") for the human body, a given human organ or tissue, the organ or tissue on a cell level, the organ or tissue on a sub-cell level like the structure of an endothelial cell or a mitochondrion. In particular, on every level the functionality of e.g. an organ at the current zoom level can be visualized or animated.

However, the present invention can be implemented or realized in appliances being used in different fields of science or technology, including but not limited to biological systems and processes or mechanical or electrical engineering devices and processes. In case of the virtual object being a mechanical or electrical engineering device, the vertical (zoom) direction can provide super zoom levels for the device itself, miniaturized machine parts, printed circuit boards (PCBs) implemented in the respective machine part, the electronic components like resistors, diodes or transistors being implemented on the board, microscopic details of these components, etc.

As in the example depicted in FIG. 1A and FIG. 1B, on every zoom level, the functionality of e.g. a machine part or component at the current zoom level can be visualized or animated.

The application or appliance, in the present embodiment, is implemented in a tablet computer which comprises a touch screen schematically shown in FIG.s 1A and 1B. The appliance provides exemplary five (super) zoom levels 100 - 120 and 125 - 145. The zoom levels 100 - 120 depicted in FIG. 1A relate to a zoom-in procedure wherein the zoom levels 125 - 145 depicted in FIG. 1B relate to a zoom-out procedure. In the present example, between the depicted zoom levels it is switched successively, i.e. from one zoom level to a next (adjacent) zoom level. Of course, stretching or closing of only two fingers being in contact with the touch screen will provide a continuous change of the zoom factor, as known in the prior art.

Referring to FIG. 1A, the first zoom level 100 depicts the mentioned human body as a whole, the right hand 101 of a user is depicted in order to illustrate an exemplary user input control using the touch screen. In this example, in addition to the thumb 102 and the forefinger 103, the touch of the middle finger 104 and the simultaneous stretching of all three fingers, triggers the switching from the first zoom level 100 to the next (second) zoom level 105. The second zoom level 105, in the present example, depicts an organ of the human body, in the present example the heart. The third zoom level 110 depicts a cross-section through the heart, wherein the fourth zoom level 115 depicts a coronary artery of the heart. Finally, the fifth zoom level 120 depicts an endothelial cell in the coronary artery.

As mentioned above, each zoom level (layer) 100, 105, 110, 115, 120 differs from an adjacent zoom level (layer) by a considerably different zoom factor. For instance, the forth zoom level 115 and the fifth zoom level 120 differ from each other insofar as the details of the coronary artery can be made visible to a user using a light microscope (LM) wherein the details of the endothelial cell can only be made visible using an electron microscope (SEM or TEM). As a consequence, using only the known zoom procedure based on stretching two fingers, the corresponding zoom factors could only be reached either using a low-resolution zoom procedure thus potentially hiding relevant information during zoom or using a high-resolution zoom procedure but requiring cumbersome and thus time consuming control commands by the user in order to cover the whole range of zoom factors between the two zoom levels 115, 120.

Referring to FIG. 1B, it is illustrated how a user can zoom-out starting from the above described fifth zoom level 120, now assigned reference numeral 125, towards the first zoom level 100, now assigned reference numeral 145. The fifth zoom level 125 depicts the mentioned endothelial cell and shows again the right hand 126 of the user, together with the thumb 127, the forefinger 129 and the middle finger 128. In order to activate the zoom-out and to switch from the fifth zoom level 125 to the adjacent fourth zoom level 130, the touch positions of three fingers 127, 128, 129 have to be closed, or brought together respectively, instead of being stretched, as in case of the zoom-in procedure (see FIG. 1A). The other zoom levels 135, 140, 145 can be reached accordingly.

It should be mentioned that the above described zoom-in and zoom-out procedure is only exemplary and, as will become more evident from the subsequent description, it can be switched not only between adjacent zoom levels but also between arbitrary zoom levels, when using certain user control input.

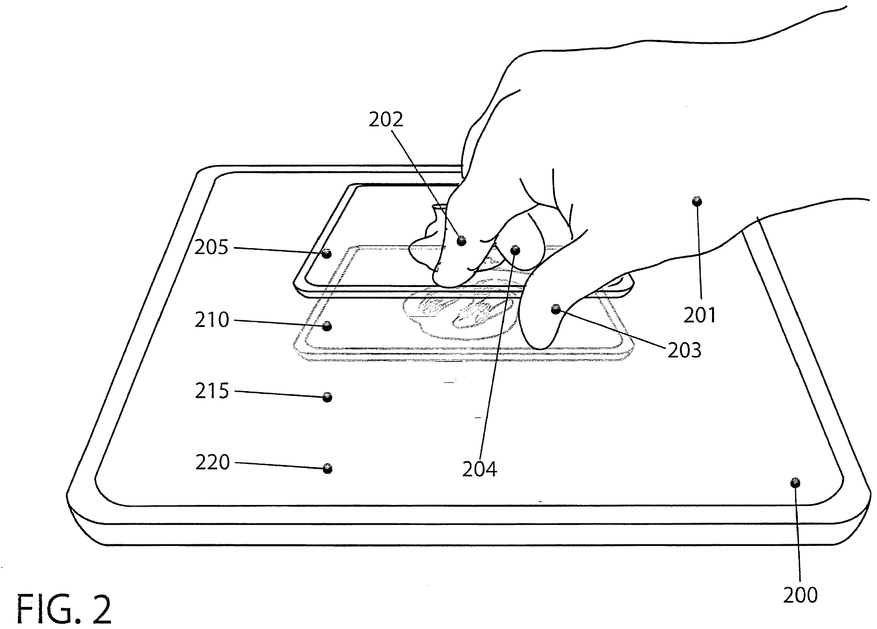

FIG. 2 shows an exemplary method according to the invention in order to illustrate how fast switching between different zoom levels can be implemented. As in FIG.s 1A and 1B, a perspective schematic view of the touch screen 200 of a tablet computer is depicted. In addition, the user's right hand 201 is shown. In this example, the fast switching is accomplished using three fingers, namely the user's thumb 203, the forefinger 202 and the middle finger 204. On the screen 200, four zoom levels 205, 210, 215, 220 are depicted.

The speed of spreading or closing the three fingers determines the jump width for the fast switching. For instance, the faster the speed of spreading or closing the three fingers, the more zoom levels can be skipped. Only as an example, by way of fast switching it can be switched directly from the first zoom level 205 to the third zoom level 215 or even the fourth zoom level 220, or vice versa, thus skipping an interim switch to the second zoom level 210. Of course, as in the previous example depicted in FIG.s 1A and 1B, two-finger stretching or closing will provide a contiguous change of the zoom factor, as known in the prior art.

However, the above described super zoom procedure can also be implemented based on the spreading or closing speed of only two fingers instead of three fingers, but in that case the spreading or closing speed must exceed a certain (minimum) threshold value in order to prevent a conflict with the above mentioned procedure to continuously changing the zoom factor within one zoom level. Further it becomes evident for a skilled reader that using three fingers, i.e. a third finger as input control means, provides much more stable super zoom functionality than in case of using only two fingers (see e.g. the above mentioned conflict).

In a non-inventive alternative, instead of the described three finger approach, another user input control means like a data carrousel, a scroll bar, a pull-up or pull-down menu, or a scroll wheel, can be used, in order to select a certain zoom level from a list of all available zoom levels.

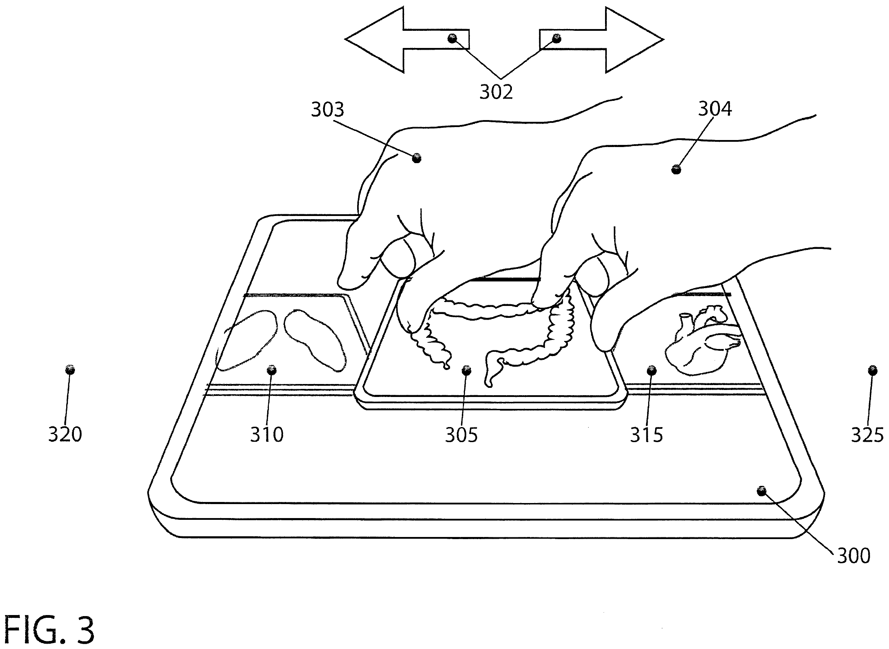

FIG. 3 shows another exemplary procedure according to the invention which allows a user to horizontally switch between different information categories or levels (layers) or even objects which preferably relate to an object (e.g. a human organ) being presented on a current zoom level. The switching between this different information levels or layers does not change the zoom factor or does not switch to another zoom level or layer. As in the previous FIG.s, a touch screen 300 of a tablet computer is depicted, together with a user's right hand at two positions 303, 304. The different information may be different human diseases for each of the human organs or tissues being presented on the different zoom levels, as described in FIG.s 1A, 1B and FIG. 2.

In the present example, in the horizontal direction (arrows 302) are depicted different human organs, namely a small intestine 305, a lung 310, a heart 315, a liver 320 and a stomach 325. Moving the three fingers to the left or the right 302, i.e. without spreading or closing the fingers as described above, these related objects can be selected or loaded. For a currently selected object, like the small intestine 305 in the present example, the above described super zoom procedure can be applied to, in order to switch to different zoom levels for these organs.

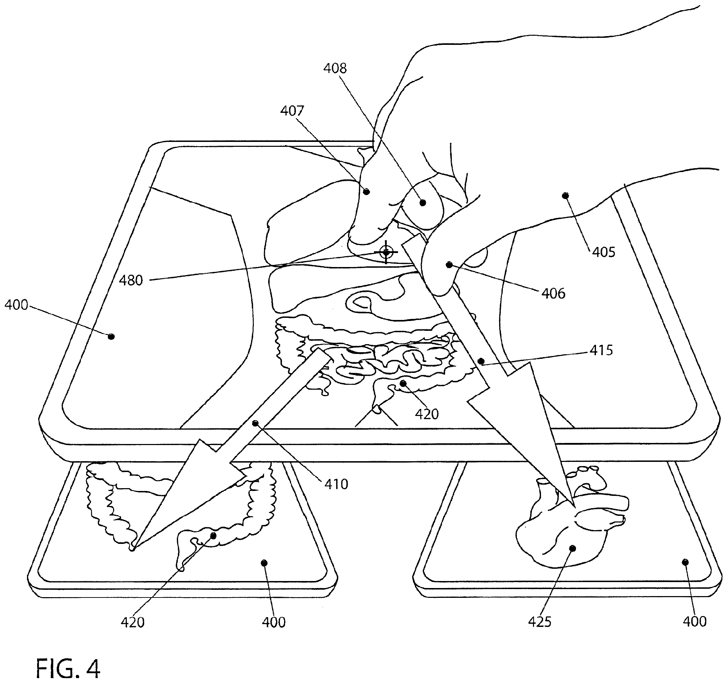

In FIG. 4 an exemplary procedure according to the invention is illustrated which allows a user to select an area or part of a currently selected object, which in the present example is a virtual 3D (three dimensional) presentation of the inner organs of a human body (e.g. heart 425 and small intestine 420), in order to switch to another zoom level starting from this area or part. In this example, three screenshots of a touch screen 400 of a tablet computer are shown. In addition, the user's right hand 405, together with the user's thumb 406, forefinger 407 and middle finger 408 are depicted.

The position of the three fingers 406 - 408, while spreading or closing them, determines the position of a virtual pointer on the object which will be used as starting position when switching to another zoom level. In the present embodiment, the virtual pointer is depicted by a cross within a circle 480. In the present example, the virtual pointer's position on the object is determined by the balance or focal point of the three fingers. However, the position can be determined in other ways e.g. using a weighted balance of the three fingers, only the focal point between two fingers, or the like. If the focal point points to the heart 425, as indicated by the arrow 415, the heart 425 will be selected for zooming-in, including the described switch of zoom levels. Accordingly, if the focal point points to the small intestine 420, as indicated by the arrow 410, the small intestine 420 will be selected for zooming-in, including the described switch of zoom levels.

It should be noted that the depicted 3D object, prior to the described selection of an inner organ, can be rotated virtually on the screen, e.g. by using one finger, wherein putting three fingers on the touchscreen will generate a virtual pointer essentially at the center of the three fingers which marks a focus position at the currently presented part of the 3D object, where a quick zoom navigation into the object will be started. Dependent on the speed of the third finger movement, a certain zoom level can be selected, and thus the user can intuitively zoom forth and back into a certain part or portion of the object which provides for a high user convenience.

In the above described application scenario of a human body and included organs, a particular advantage of the described approach is that, for a currently selected zoom level of a displayed body or organ, the relevant human biological functions of the part of the body or the organ can be presented at the same time and automatically, namely those functions which can be visualized in the current zoom level.

For instance, on a cellular zoom level, supply of human cells with certain nutritional, preventive or therapeutic compounds and the resulting cell reaction can be visualized, observed or even be investigated by the user. Only exemplarily, if a process of arteriosclerosis which develops on cellular level hinders or even stops blood flow or circulation through the artery, the organ zoom level (beyond the cell level) allows to visualize, observe or investigate the consequences of a cardiac infarction or coronary thrombosis, e.g. the effect of ventricular fibrillation.

Since the described approach allows a user to obtain an intuitive understanding of complex interacting biological or biochemical mechanisms, according to another aspect of the invention, the described method can be implemented as a learning tool.

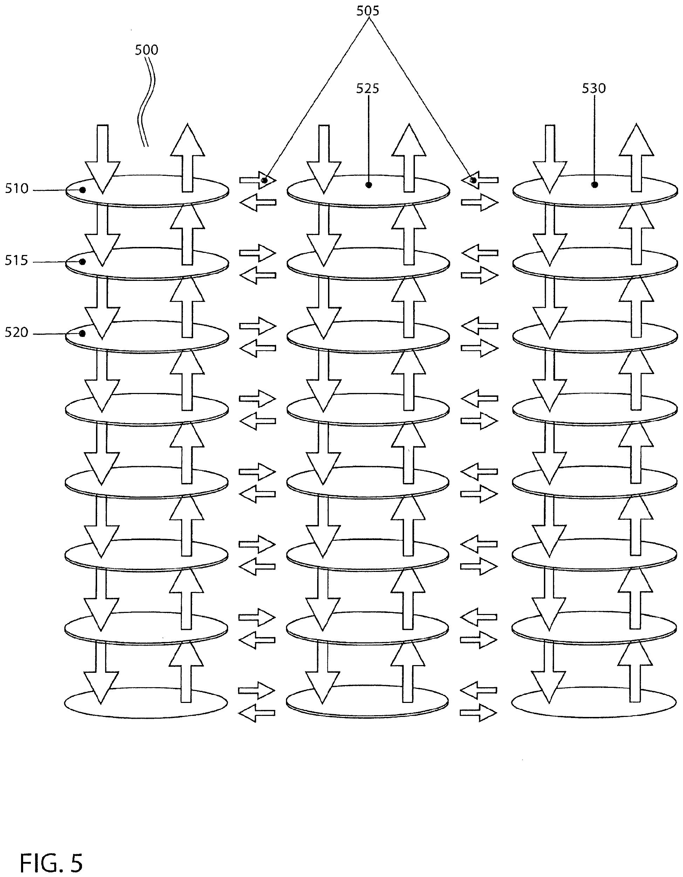

FIG. 5 depicts an exemplary array arrangement or structure of zoom levels, according to the vertical direction 500, versus the mentioned different object categories or information categories, according to the horizontal direction 505. This arrangement includes eight zoom levels 510, 515, 520, etc. and three information category layers 510, 525, 530, etc. Navigation or switching between these zoom levels and information layers can be accomplished by way of the above described procedures and as indicated by the various arrows depicted in the arrangement.

It is emphasized that the above described procedures allow a user to switch between adjacent zoom levels, e.g. levels 510 and 515, or between non adjacent zoom levels, e.g. levels 510 and 520, and/or between adjacent information layers, e.g. layers 500 and 525, or between non adjacent information layers, e.g. layers 500 and 530.

It is further emphasized that the shown number of zoom levels and object/information layers is only exemplary and can vary. Of course, in case of a multitude of such levels and layers, the zoom/navigation approach according to the invention will become even more advantageous since saving a lot of efforts and time for using the underlying appliance, or super zoom functionality, respectively.

In case of an above described human body, the horizontal direction of the array can be different human organs or tissues, different human diseases, etc. In case of the mentioned field of mechanical or electrical engineering, the horizontal direction can be related to different machine parts.

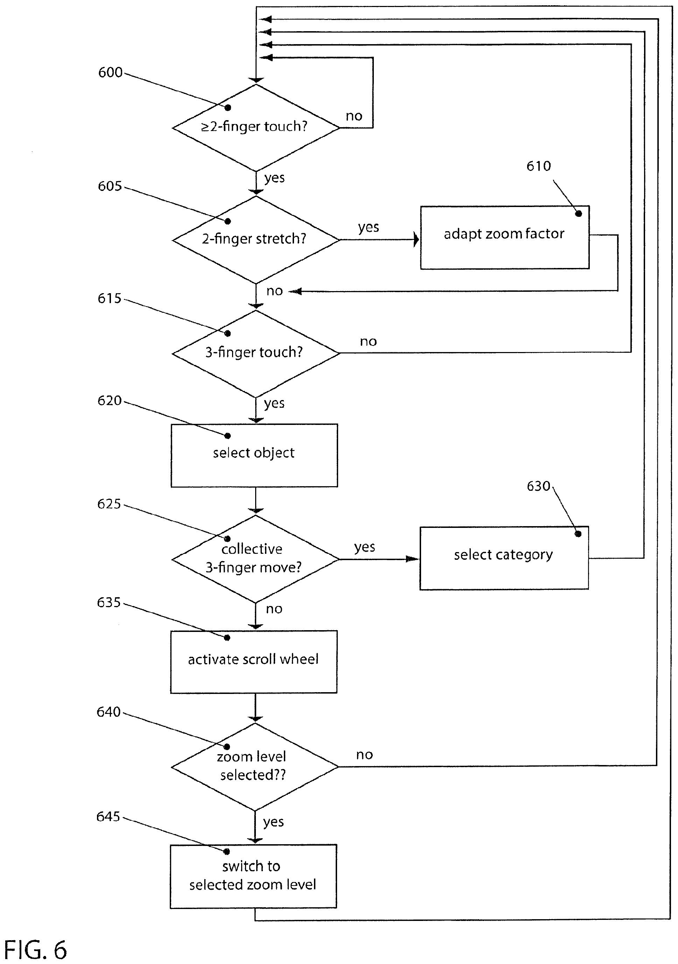

FIG. 6 shows a flow diagram of a preferred embodiment of the method according to the invention. The shown procedure first checks 600 whether a touch of at least two fingers of the user has occurred. If not, it is jumped back to the beginning so that the following part of the procedure will only start in such case.

If it is detected 600 that a finger touch of equal or more than two fingers has occurred, it is checked 605 whether two of the at least two fingers have been stretched or closed during the touch, i.e. during contact with the touch screen. If such a stretch or close has been detected, the zoom factor will be adapted 610 accordingly, i.e. the presented object being presented on the screen will be either magnified (enlarged) or de-magnified.

As a next step 615, it is checked whether a three-finger touch has occurred which will start the above described super-zoom procedure and insofar it is jumped back to the beginning, step 600, if this condition is not fulfilled. If a three-finger touch has been detected, in the present example, an object or a part of an underlying object is selected 620 for possible super-zoom operation, e.g. using the above described virtual pointer 480. After selection 620 of the object, it is checked 625 whether a collective three-finger shift, i.e. a collective movement preferably in the horizontal direction, or a collective stretch of the three fingers, has occurred. If such a collective shift or stretch has been detected 625, a corresponding information category or object is selected 630, as described beforehand. After selection of a new information category or object, the super zoom procedure starts again from the beginning, step 600.

If, in step 625, a collective three-finger shift or stretch is not detected, in the present embodiment, which is not according to the present invention, in the succeeding step 635 a scroll wheel or the like is activated and displayed on the screen, which allows the user to select a certain zoom level from the available zoom levels. In the following step 640 it is checked whether the user has selected a certain zoom level using the displayed scroll wheel. In this case, the described super-zoom procedure or super-zoom functionality of an underlying appliance or program, switches 645 directly to the selected zoom level, as described previously in more detail, and then jumps back to the beginning in step 600. Otherwise, it is jumped back from step 640 to the beginning, i.e. step 600.

Of course, the described method is only exemplary and insofar can be modified but still being covered by the underlying concept of the invention. In particular, the order of the described method steps can vary and insofar is regarded only as illustrative for the mentioned concept.

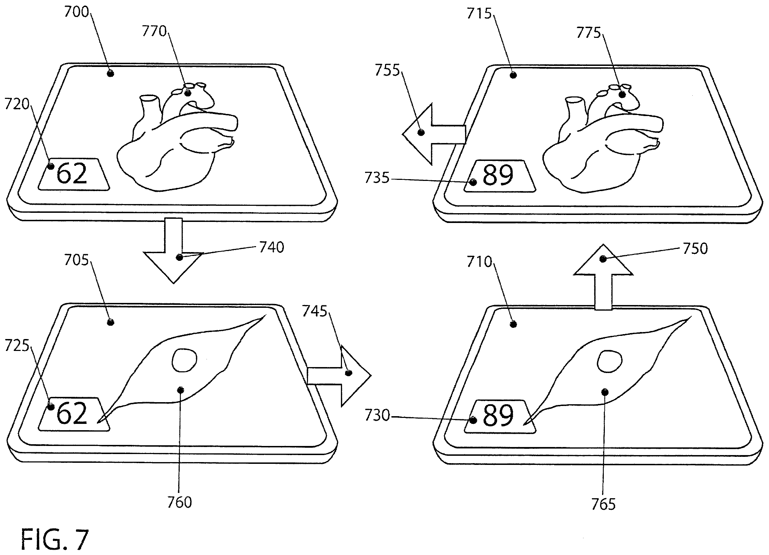

Another embodiment of the invention is shown in FIG. 7 which depicts four screenshots 700, 705, 710, 715 of two different zoom levels 700, 715 and 705, 710. The first zoom level 700, 715 shows a human heart 770, 775 wherein the second zoom level 705, 710 shows an endothelial cell 760, 765 of the heart 770, 775. It is emphasized that, in the present super-zoom navigation example, these two zoom levels 700, 715 and 705, 710 are not adjacent i.e. an intermediate zoom level depicting the coronary artery is surpassed when switching between the two zoom levels 700, 715 and 705, 710. In the present example, the process of switching or navigation between the four screenshots 700 - 715 is depicted by arrows 740, 745, 750, 755.

The numbers 720, 725, 730, 735 further depicted in the screenshots 700 - 715 are current heart beat frequencies. The shown change of the heart frequency from 62 Hz to 89 Hz is caused by an administered preventive therapeutic compound on cell level 705. The medical or physiological effect of this therapeutic compound, i.e. the only exemplarily shown increase of the heart beat frequency, in the present embodiment of the GUI, takes immediately effect at the upper zoom level 700, 710 as well, and in the present example visualized at the same time on the upper zoom level 700, 715 by an animated beating heart.

As mentioned above, the first zoom level 700, 715 and the second zoom level 705, 710 can be presented at the same time on one display or screen thus improving the information content of the GUI, in particular to improve the way how to illustrate the mentioned effects on e.g. cell level and organ level.

The invention can be utilized mainly in connection with handheld devices having touchscreens. Non-inventive embodiments are also applicable for Personal Computers when using a certain combination of the computer keyboard's control buttons, e.g. in conjunction with a computer mouse. In case of a keyboard, mouse or any other user input controller, the above described method (FIG. 6) has to be modified accordingly wherein the steps of checking certain finger contacts or movements have to be replaced by checking certain controller input or keystroke combinations, as it will be well understood by an attentive reader. Beyond that the control input by the user to control the described procedures can be implemented using a camera which can detect the user's viewing direction and use the detected direction to select an object or zoom level. The above described finger gestures being used in connection with touch screen, in the present scenario, can be replaced by finger or hand gestures which can be detected by the camera thus triggering a certain GUI action, in particular action in relation to the described extended zoom functionality.

The proposed functionality can be implemented in educational or training appliances or tools, in order to provide for an easy and quick access to zoom levels covering many orders of magnitude.

## Claims

1. A method of providing an extended virtual zoom functionality for an object being presented in a graphical user interface on a display (200) of a data processing device or system, the data processing device or system including a touch-sensitive screen, comprising: providing at least two discrete zoom layers (205 - 220), wherein the at least two discrete zoom layers (205 - 220) each have a minimum and maximum zoom factor, and wherein within one of the at least two discrete zoom layers (205 -220) the zoom factor is changed continuously between said respective minimum and maximum zoom factor based on stretching or closing of two fingers (202, 203) in contact with the touch sensitive screen, **characterized in that**
switching between arbitrary discrete zoom layers of the at least two discrete zoom layers is carried out based on a user action using three fingers (202- 204), wherein the speed of the spreading or closing of the three fingers determines the number of skipped zoom layers between said arbitrary discrete zoom layers.

2. Method according to claim 1 wherein the position of the three fingers (202 - 204), or the two fingers (202, 203), determines the position of a virtual pointer on the object which is used as starting position when switching to another discrete zoom layer.

## Patentansprüche

1. Verfahren zum Bereitstellen einer erweiterten virtuellen Zoomfunktion für ein Objekt, das in einer grafischen Benutzerschnittstelle auf einer Anzeige (200) einer Datenverarbeitungsvorrichtung oder eines Datenverarbeitungssystems dargestellt wird, wobei die Datenverarbeitungsvorrichtung oder das Datenverarbeitungssystem einen berührungsempfindlichen Bildschirm aufweist, umfassend:
Bereitstellen von mindestens zwei diskreten Zoomebenen (205 - 220), wobei die mindestens zwei diskreten Zoomebenen (205 - 220) jeweils einen minimalen und einen maximalen Zoomfaktor aufweisen und wobei innerhalb einer der mindestens zwei diskreten Zoomebenen (205 - 220) der Zoomfaktor kontinuierlich zwischen dem jeweiligen minimalen und maximalen Zoomfaktor basierend auf Strecken oder Schließen von zwei Fingern (202, 203) in Kontakt mit dem berührungsempfindlichen Bildschirm geändert wird,
**dadurch gekennzeichnet, dass**
das Umschalten zwischen beliebigen diskreten Zoomebenen der mindestens zwei diskreten Zoomebenen basierend auf einer Benutzeraktion unter Verwendung von drei Fingern (202 - 204) ausgeführt wird, wobei die Geschwindigkeit des Spreizens oder des Schließens der drei Finger die Anzahl der übersprungenen Zoomebenen zwischen den beliebigen diskreten Zoomebenen bestimmt.

2. Verfahren nach Anspruch 1, wobei die Position der drei Finger (202 - 204) oder der zwei Finger (202, 203) die Position eines virtuellen Zeigers auf dem Objekt bestimmt, der als Startposition beim Umschalten auf eine andere diskrete Zoomebene verwendet wird.

## Revendications

1. Procédé de fourniture d'une fonctionnalité de zoom virtuel étendu pour un objet présenté dans une interface utilisateur graphique sur un affichage (200) d'un dispositif ou système de traitement de données, le dispositif ou système de traitement de données comprenant un écran tactile, comprenant les étapes consistant à :
prévoir au moins deux couches de zoom discrètes (205 à 220), dans lequel lesdites au moins deux couches de zoom discrètes (205 à 220) présentent chacune un facteur de zoom minimum et maximum, et dans lequel à l'intérieur d'une desdites au moins deux couches de zoom discrètes (205 à 220), le facteur de zoom est modifié en continu entre lesdits facteurs de zoom minimum et maximum sur la base d'un écartement ou d'un rapprochement de deux doigts (202, 203) en contact avec l'écran tactile,
**caractérisé en ce que** la commutation entre des couches de zoom discrètes arbitraires desdites au moins deux couches de zoom discrètes est exécutée sur la base d'une action de l'utilisateur utilisant trois doigts (202 à 204), dans lequel la vitesse de l'écartement ou du rapprochement des trois doigts détermine le nombre de couches de zoom sautées entre lesdites couches de zoom discrètes arbitraires.

2. Procédé selon la revendication 1, dans lequel la position des trois doigts (202 à 204) ou des deux doigts (202, 203) détermine la position d'un pointeur virtuel sur l'objet qui est utilisée comme position de départ lors de la commutation sur une autre couche de zoom discrète.
